# EUROPÄISCHE PATENTSCHRIFT

(11) **EP 3 245 695 B1**
(45) Veröffentlichungstag und Bekanntmachung des Hinweises auf die Patenterteilung: **03.03.2021**
(21) Anmeldenummer: 16700435.7
(22) Anmeldetag: 12.01.2016
(51) Int. Cl.: H02H 3/07, H02H 3/16, H02H 7/22

(54) **VERFAHREN UND VORRICHTUNG ZUM LÖSCHEN EINES LICHTBOGENS IN EINEM WECHSELSTROMSYSTEM**
METHOD AND DEVICE FOR EXTINGUISHING AN ARC IN AN ALTERNATING CURRENT SYSTEM
PROCÉDÉ ET DISPOSITIF D'EXTINCTION D'ARC ÉLECTRIQUE DANS UN SYSTÈME À COURANT ALTERNATIF

(30) Priorität: 13.01.2015 DE 102015100446
(43) Veröffentlichungstag der Anmeldung: 22.11.2017
(73) Patentinhaber: Eaton Intelligent Power Limited, Dublin 4 (IE)
(72) Erfinder: HAUER, Wolfgang, 4191 Vorderweissenbach (AT)
(74) Vertreter: Eaton IP Group EMEA
(86) Internationale Anmeldenummer: PCT/EP2016/050489
(87) Internationale Veröffentlichungsnummer: WO 2016/113268

(56) Entgegenhaltungen:
- EP-A2- 1 058 366
- DD-A1- 234 541
- DE-A1- 3 132 338
- DE-A1- 4 438 593
- US-A- 4 288 830

## Beschreibung

### TECHNISCHES GEBIET

Die Erfindung betrifft ein Verfahren zum Löschen eines Lichtbogens in einem Wechselstromsystem gemäß Anspruch 1. Die Erfindung betrifft auch eine Steuerung für zumindest zwei antiparallel geschaltete Halbleiterschaltelemente eines Kurzschlussschalters zum Löschen eines Lichtbogens in einem Wechselstromstromsystem gemäß Anspruch 7.

Schließlich betrifft die Erfindung auch eine Anordnung zum Löschen eines Lichtbogens in einem Wechselstromsystem, umfassend einen Kurzschlussschalter mit zumindest zwei antiparallel geschalteten Halbleiterschaltelementen sowie eine Steuerung der genannten Art, welche mit den Halbleiterschaltelementen verbunden ist.

### STAND DER TECHNIK

Ein solches Verfahren, eine solche Steuerung und eine solche Vorrichtung sind grundsätzlich bekannt und werden beispielsweise in elektrischen Anlagen eingesetzt, um etwa Menschen und/oder die Anlage selbst vor den zerstörerischen Auswirkungen eines durch einen Kurzschluss verursachten Lichtbogens zu schützen oder um wenigstens dessen Auswirkungen abzumildern. Beispielsweise können Tiere oder auch herunterfallendes Werkzeug sowie (feuchter) Schmutz die Isolation beziehungsweise die Funkenstrecke zwischen zwei Leitern auf unterschiedlichem Spannungspotential derart herabsetzen, dass ein solcher Lichtbogen entsteht. Durch die teils sehr hohen resultierenden Ströme kann es zu heftigen Explosionen aufgrund der sich in kurzer Zeit aufheizenden Luft kommen.

Beispielsweise offenbart die D 199 52 507 A1 dazu ein Verfahren, bei dem ein Störlichtbogen sensorisch erfasst wird und in Folge triggerbare Schalter der Leistungsimpulstechnik, insbesondere Halbleiterschalter, aktiviert werden und einen Kurzschluss schalten, um den Störlichtbogen in sehr kurzer Zeit zu löschen. Problematisch ist dabei, dass die Halbleiterschalter nur bedingt dafür geeignet sind, um extrem hohe Ströme abzuführen. Diese Halbleiterschalter werden dementsprechend schnell kaputt und müssen dann ausgetauscht werden.

Weiterhin offenbart die DE 44 38 593 A1 einen Thyristor-Kurzschließer und ein Verfahren zum Löschen von Störlichtbögen in Schaltanlagen zur Verteilung elektrischer Energie. Der Kurzschließer soll dabei auch mehrmals verwendbar sein, was dadurch erreicht wird, dass jeweils eine Drossel in Reihe mit den Thyristoren oder Thyristorpaaren geschaltet ist. Zum Löschen von Störlichtbögen wird die Spannung an den Sammelschienen auf einen von der geometrischen Auslegung der Schaltanlage abhängigen Wert gesenkt, wobei der Wert etwa 80 bis 200 V beträgt.

Schließlich offenbart die DD 234 541 A1 ein weiteres Verfahren zur Überwachung von Störlichtbögen in Schaltanlagen. Um eine rasche Abschaltung der Anlage bei Auftreten eines Störlichtbogens durchführen zu können, wird bei Überschreiten eines minimalen Werts des Stromanstiegs, des Absolutwertes des Stromes sowie dem gleichzeitigen Ansprechen eines optischen Lichterfassungsgliedes ein Impuls zur Auslösung der den Lichtbogen speisenden Schaltgeräte gegeben.

### OFFENBARUNG DER ERFINDUNG

Eine Aufgabe ist es daher, ein verbessertes Verfahren eine verbesserte Steuerung und eine verbesserte Vorrichtung zum Löschen eines Lichtbogens in einem Wechselstromsystem anzugeben. Insbesondere soll die Lebensdauer der eingesetzten Halbleiterschalter deutlich verlängert werden, sodass ein Austausch nicht oder nur seltener erforderlich ist. Darüber hinaus soll im Speziellen auch erreicht werden, dass eine elektrische Anlage nach einer temporären Störung rasch und ohne manuellen Eingriff in einen normalen Betriebszustand wechselt.

Diese Aufgabe wird mit einem Verfahren der eingangs genannten Art gelöst, bei dem das Halbleiterschaltelement nach einer vorgebbaren Anzahl an Wiederzündungen des Lichtbogens geschlossen bleibt, beispielsweise nach fünf oder zehn Wiederzündungen.

Weiterhin wird die Aufgabe der Erfindung mit einer Steuerung der eingangs genannten Art gelöst, wobei die Steuerung weiter dazu ausgebildet ist, das Halbleiterschaltelement nach einer vorgebbaren Anzahl an Wiederzündungen des Lichtbogens dauerhaft zu schließen.

Schließlich wird die Aufgabe der Erfindung auch durch eine Anordnung zum Löschen eines Lichtbogens in einem Wechselstromsystem gelöst, umfassend einen Kurzschlussschalter mit zumindest zwei antiparallel geschalteten Halbleiterschaltelementen sowie eine Steuerung der oben genannten Art, welche mit den Halbleiterschaltelementen verbunden ist.

Durch die vorgeschlagenen Maßnahmen kann eine manuelle Intervention bei einer lediglich temporären Störung einer elektrischen Anlage vermieden werden. Durch die hohe Energie des Lichtbogens kann es nämlich sein, dass die Ursache für Lichtbogen (Metallteil, Schmutz, Staub, usw.) schlicht und einfach verdampft und kein weiterer Eingriff nötig ist. Die elektrische Anlage kann in diesem Fall in sehr kurzer Zeit wieder in den Normalbetrieb übergehen. Lediglich bei Störungen, deren Ursache nicht "von selbst" verschwindet, sind weitere Maßnahmen nötig, insbesondere eine Wartung durch geschultes Personal. Jedoch kann der Störlichtbogen durch die vorgeschlagenen Maßnahmen länger auf die Störung einwirken, wodurch beispielsweise auch größere Metallteile verdampft werden können, ohne dass ein manueller Eingriff nötig ist. Zudem kann die Lebensdauer der verwendeten Halbleiterschalter durch die vorgeschlagenen Maßnahmen deutlich verlängert werden, da diese nur so lange mit den hohen Kurzschlussströmen belastet werden, solange dies auch nötig ist.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn eine Überprüfung im Hinblick auf ein neuerliches Zünden des Lichtbogens bei jedem Wenden des Stroms stattfindet. Der Kurzschlussschalter und Zuleitungen werden dann gerade nur so lange mit dem Kurzschluss belastet, solange die Störung anhält.

Günstig ist es aber auch, wenn zwischen einer Detektion eines Lichtbogens und einer nachfolgenden Überprüfung im Hinblick auf ein neuerliches Zünden des Lichtbogens mehrere Halbwellen des Wechselstroms liegen. Die Steuerung des Kurzschlussschalters kann dann einfacher gestaltet werden.

Günstig ist es auch, wenn das Halbleiterschaltelement nach dem ersten Wiederzünden des Lichtbogens geschlossen bleibt. Auf diese Weise können die schädlichen Auswirkungen des Störlichtbogens auf die elektrische Anlage gering gehalten werden, da dieser wegen des permanenten Kurzschlusses nicht mehr zünden kann.

Vorteilhaft ist es auch, wenn ein dem Kurzschlussschalter vorgelagerter Schalter mit oder nach dem dauerhaften Schließen des Kurzschlussschalters geöffnet wird. Insbesondere kann der Schalter mit der vorgestellten Steuerung verbunden sein. Dadurch kann eine übermäßige Belastung der Zuleitungen und auch des Kurzschlussschalters selbst vermieden werden.

Günstig ist es auch, wenn beide antiparallel geschaltete Halbleiterschaltelemente synchron angesteuert werden. Dadurch kann die Steuerung vereinfacht werden.

In einer vorteilhaften Ausführungsform der vorgestellten Anordnung umfasst diese Stromsensoren zum Messen eines Stroms in einer Zuleitung zum

Überwachungsbereich und/oder einem Lichtsensor zum Erfassen von Licht im Überwachungsbereich, welche an die Steuerung angeschlossen sind. Dadurch kann das Auftreten eines Störlichtbogens mit hoher Sicherheit festgestellt werden.

An dieser Stelle wird angemerkt, dass sich die zum vorgestellten Verfahren offenbarten Varianten und die daraus resultierenden Vorteile gleichermaßen auf die vorgestellte Steuerung und Anordnung beziehen und umgekehrt.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine beispielhafte Vorrichtung zum Löschen eines Lichtbogens in einem Dreiphasensystem;
- Fig. 2: eine beispielhaften Ablauf, bei dem der Lichtbogen nach dem Öffnen des Kurzschlussschalters erloschen bleibt und
- Fig. 3: eine beispielhaften Ablauf, bei dem der Lichtbogen nach dem Öffnen des Kurzschlussschalters weiterhin bestehen bleibt beziehungsweise wieder gezündet wird.

### DETAILIERTE BESCHREIBUNG DER ERFINDUNG

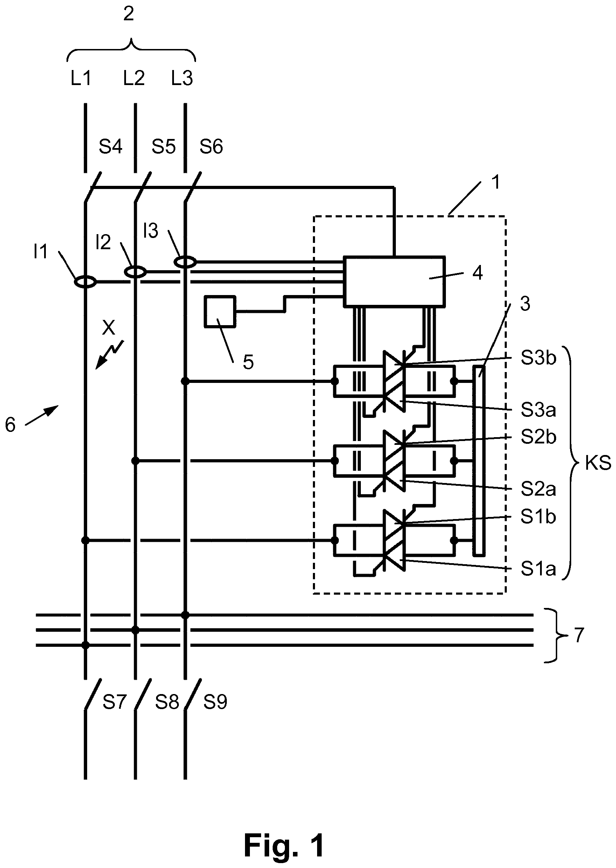

Fig. 1 zeigt eine Vorrichtung 1 zum Löschen eines Lichtbogens X in einem Mehrphasensystem 2 mit Hilfe eines Kurzschlussschalters KS, welche mehrere Schaltelemente S1a..S3b umfasst. Die Halbleiterschaltelemente S1a..S3b sind in diesem Beispiel konkret durch je zwei antiparallel angeordnete Thyristoren pro Phase L1..L3 ausgebildet. Denkbar wäre aber auch, dass andere Halbleiterschaltelemente verwendet werden, beispielsweise IGBTs (Insulated Gate Bipolar Transistoren). Mit Hilfe der antiparallel angeordneten Halbleiterschalter S1a..S3b kann sowohl die positive als auch die negative Halbwelle eines Wechselstroms kurzgeschlossen werden.

In dem gezeigten Beispiel sind die Halbleiterschaltelemente S1a..S3b über die Verbindungsschiene 3 im Stern geschaltet. Der Sternpunkt ist in diesem Beispiel frei, er könnte aber auch mit einem (nicht dargestellten) Neutralleiter verbunden sein. Denkbar wäre aber natürlich auch, dass die Halbleiterschaltelemente S1a..S3b im Dreieck geschaltet sind.

Zusätzlich zu den Halbleiterschaltelementen S1a..S3b weist die Vorrichtung 1 eine mit diesen verbundene Steuerung 4 auf. In einer vorteilhaften Ausführungsvariante können mehrere der Halbleiterschaltelemente S1a..S3b, insbesondere alle Halbleiterschaltelemente S1a..S3b, in einem gemeinsamen Gehäuse eines Kurzschlussschalters KS angeordnet sein. Optional kann auch die Steuerung 4 in dem gemeinsamen Gehäuse angeordnet sein. Prinzipiell können die genannten Komponenten aber auch in gesonderten Gehäusen untergebracht sein.

In der Fig. 1 sind zusätzlich zu den bereits erwähnten Bauteilen mehrere optionale, mit der Steuerung 4 verbundene Stromsensoren I1..I3 vorgesehen, von denen je einer je einer Phase L1..L3 zugeordnet ist. Zusätzlich ist auch ein optionaler mit der Steuerung 4 verbundener Lichtsensor 5 vorgesehen. In dem konkret dargestellten Beispiel ist nur ein einziger mit der Steuerung 5 verbundener Lichtsensor 5 vorgesehen. Vorstellbar ist aber auch, dass die Anordnung mehrere mit der Steuerung 4 verbundene Lichtsensoren 5 aufweist, von denen je einer je einer Phase L1..L3 zugeordnet ist. Mit den Stromsensoren I1..I3 kann ein Stroms in der Zuleitung zu einem Überwachungsbereich 6 gemessen werden, und mit dem Lichtsensor 5 kann ein im Überwachungsbereich 6 auftretender Lichtblitz erfasst werden.

Schließlich sind in der Fig. 1 noch weitere von der Steuerung 4 gemeinsam angesteuerte Schalter S4..S6 vorgesehen, welche der Vorrichtung 1 vorgelagert sind sowie weitere Schalter S7..S9, welche der Vorrichtung 1 nachgelagert sind. Darüber hinaus ist auch noch ein weiterführendes Stromverteilersystem 7 dargestellt.

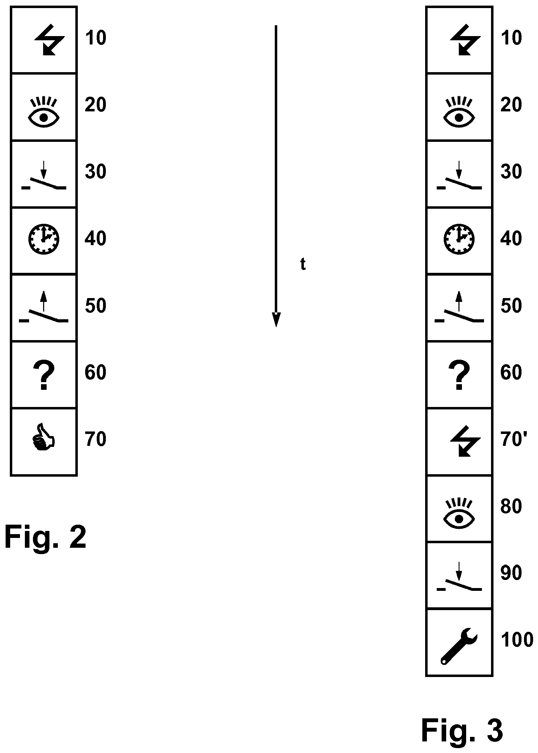

Die Funktion der in der Fig. 1 dargestellten Anordnung ist nun wie folgt, wobei auf die Figuren 2 und 3 Bezug genommen wird, welche einen zeitlichen Ablauf mehrerer Verfahrensschritte in Form von Piktogrammen zeigen:
Zu einem ersten Zeitpunkt 10 tritt im Überwachungsbereich 6 ein Lichtbogen X auf. Durch den Lichtbogen X messen die Stromsensoren I1..I3 einen Kurzschlussstrom, welcher von der Steuerung 4 erfasst wird. Zudem wird geprüft, ob der Lichtsensor 5 ein von einem Lichtbogen herrührendes Licht detektiert. Sind beide Bedingungen erfüllt, so wird der Lichtbogen X in einem Schritt 20 erkannt. Als Folge steuert die Steuerung 4 die Halbleiterschaltelemente S1a..S3b in einem Schritt 30 an, um den Lichtbogen X zu löschen. Vorteilhaft werden dabei beide der je Phase L1..L3 antiparallel geschalteten Halbleiterschaltelemente S1a..S3b synchron angesteuert, prinzipiell ist es aber ausreichend, die in Flussrichtung des Stroms liegenden Halbleiterschaltelement S1a..S3b des Kurzschlussschalters KS zu schließen.

Für das gegebenen Beispiel wird der Einfachheit halber im Folgenden nur die Phase L1 betrachtet, für die angenommen wird, dass das Halbleiterschaltelement S1a im Schritt 30 in Flussrichtung des Stroms liegt. Die technische Lehre ist jedoch sinngemäß auch für die anderen Phasen L2, L3 beziehungsweise Halbleiterschaltelement S2a..S3b anwendbar

Nach einer gewissen Zeit wendet der Strom, wodurch das Halbleiterschaltelement S1a ohne einen neuerlichen Zündimpuls in den Sperrzustand übergeht. Der Zeitablauf ist in den Figuren 2 und 3 mit dem Schritt 40, das Öffnen des Halbleiterschaltelements S1a mit dem Schritt 50 bezeichnet. In einem Schritt 60 wird nun geprüft, ob der Lichtbogen X weiterhin bestehen bleibt, beziehungsweise ob es zu einem Wiederzünden desselben kommt.

In dem in Fig. 2 dargestellten Ablauf bleibt der Lichtbogen X gelöscht und die elektrische Anlage kann in ihren normalen Betriebszustand übergehen, wie das im Schritt 70 symbolisiert ist.

In dem in der Fig. 3 gezeigten Schritt 70' tritt der Lichtbogen X jedoch erneut auf und wird im Schritt 80, so wie für den Schritt 20 beschrieben, detektiert. Daraufhin wird das nun in Flussrichtung des Stroms liegende Halbleiterschaltelement S1b in einem Schritt 90 geschlossen, um den Lichtbogen X zu löschen. In diesem Beispiel wird angenommen, dass die Halbleiterschaltelemente S1a, S1b nun permanent geschlossen bleiben, das heißt dass die Halbleiterschaltelemente S1a, S1b auch ohne explizite Überprüfung im Hinblick auf einen Lichtbogen X bei jeder Halbwelle gezündet werden. Diese Zustand bleibt solange aufrecht, bis der Fehler in einem Schritt 100 behoben wird, insbesondere durch manuelle Intervention.

Zusammenfassend wird also ein Verfahren zum Löschen eines Lichtbogens X in einem Wechselstromsystem mit Hilfe eines Kurzschlussschalters KS, der zumindest zwei antiparallel geschaltete Halbleiterschaltelemente S1a..S3b umfasst, angegeben. Dabei wird bei Detektion eines Lichtbogens X in einem Überwachungsbereich 6 ein in Flussrichtung des Stroms liegendes Halbleiterschaltelement S1a des Kurzschlussschalters KS geschlossen. Ein zum genannten Halbleiterschaltelement S1a antiparallel geschaltetes Halbeleiterelement S1b des Kurzschlussschalters KS wird nach einem Wenden des Stroms jedoch erst dann wieder geschlossen, wenn im Überwachungsbereich 6 nach wie vor ein Lichtbogen X detektiert wird.

Auf diese Weise kann eine manuelle Intervention bei einer lediglich temporären Störung einer elektrischen Anlage vermieden werden. Durch die hohe Energie des Lichtbogens kann es nämlich sein, dass die Ursache für Lichtbogen (Metallteil, Schmutz, Staub, usw.) schlicht und einfach verdampft und kein weiterer Eingriff nötig ist. Die elektrische Anlage kann in diesem Fall in sehr kurzer Zeit wieder in den Normalbetrieb übergehen. Lediglich bei Störungen, deren Ursache nicht "von selbst" verschwindet (vergleiche Schritt 70), sind weitere Maßnahmen nötig, insbesondere eine Wartung durch geschultes Personal (vergleiche Schritt 100).

In dem oben ausgeführten Beispiel wurde angenommen, dass die Halbleiterschaltelemente S1a, S1b nach dem ersten Wiederzünden des Lichtbogens X geschlossen bleiben. Dies ist jedoch nicht zwingend. Denkbar ist vielmehr auch, dass die Halbleiterschaltelemente S1a, S1b nach einer anderen vorgebbaren Anzahl an Wiederzündungen des Lichtbogens X geschlossen bleiben, beispielsweise nach 5 oder 10 Wiederzündungen. Auf diese Weise wirkt der Störlichtbogen X länger auf die Störung ein. wodurch beispielsweise auch größere Metallteile verdampft werden können, ohne dass ein manueller Eingriff nötig ist.

Denkbar ist in diesem Fall, dass eine Überprüfung im Hinblick auf ein neuerliches Zünden des Lichtbogens X bei jedem Wenden des Stroms stattfindet. Der Kurzschlussschalter KS und die Zuleitungen L1.. L3 werden dann gerade nur so lange mit dem Kurzschluss belastet, solange die Störung anhält. Möglich ist aber auch, dass zwischen einer Detektion eines Lichtbogens X und einer nachfolgenden Überprüfung im Hinblick auf ein neuerliches Zünden des Lichtbogens X mehrere Halbwellen des Wechselstroms liegen. Die Steuerung 4 des Kurzschlussschalters KS kann dann einfacher gestaltet werden.

Um das Versorgungsnetz durch den Kurzschluss nicht zu stark zu belasten ist es auch zweckmäßig, wenn die vorgelagerten Schalter/Öffner S4..S6 bei andauernder Störung geöffnet werden, das heißt wenn der Kurzschlussschalter KS permanent geschlossen bleibt. Dies kann, wie in der Fig. 1 dargestellt, von der Steuerung 4 übernommen werden, oder die Schalter S4..S6 werden im Falle von Überstrom durch eine autarke Steuerung geöffnet. Beispielsweise können die Schalter S4..S6 als Überstromschutzschalter ausgebildet sein. Zusätzlich zu den Schaltern S4..S6 können auch die nachgelagerten Schalter S7..S9 geöffnet werden. Dies ist insbesondere dann zweckmäßig, wenn sich im nachgelagerten Netz Speicher mit großen Mengen an elektrischer Energie befinden (z.B. Kapazitäten, Induktivitäten, Akkumulatoren), welche auch bei geöffneten Schaltern S4..S6 hohe Kurzschlussströme verursachen können.

In dem vorgestellten Verfahren wurde ein Lichtbogen X mit Hilfe der Stromsensoren I1..I3 und mit Hilfe des Lichtsensors 5 detektiert. Dies ist zwar vorteilhaft, jedoch nicht zwingend. Denkbar wäre auch, dass die Detektion des Lichtbogens X nur mit Hilfe der Stromsensoren I1..I3 (und ohne Lichtsensor 5) erfolgt, mit Hilfe der Stromsensoren I1..I3 und mehreren Lichtsensoren 5, von denen je einer je einer Phase L1..L3 zugeordnet ist, oder auch auf andere Weise. Insbesondere sind Detektionsverfahren vorstellbar, die ohne die Verwendung von Stromsensoren I1..I3 auskommen und die Detektion eines Lichtbogens X mit einem Lichtsensor 5 oder mehreren Lichtsensoren 5 vornehmen.

Generell kann die Steuerung 4 als analoge Steuerung, digitale Steuerung oder als Mischung aus Analog- und Digitalsteuerung ausgebildet sein. Insbesondere kann diese einen Mikroprozessor umfassen, in welcher ein Softwarealgorithmus zur Durchführung der Verfahrensschritte ausgeführt wird.

Abschließend wird angemerkt, dass die dargestellte Anordnung respektive deren oder dessen Bauteile nicht notwendigerweise maßstäblich dargestellt sind und daher auch andere Proportionen aufweisen können. Weiterhin kann eine Vorrichtung 1 zum Löschen eines Lichtbogens X auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Verfahren zum Löschen eines Lichtbogens (X) in einem Wechselstromsystem (L1..L3) mit Hilfe eines Kurzschlussschalters (KS), der zumindest zwei antiparallel geschaltete Halbleiterschaltelemente (S1a..S3b) umfasst, wobei
- bei Detektion (20) eines Lichtbogens (X) in einem Überwachungsbereich (6) ein in Flussrichtung des Stroms liegendes Halbleiterschaltelement (S1a) des Kurzschlussschalters (KS) geschlossen wird (30) und wobei
- ein zum genannten Halbleiterschaltelement (S1a) antiparallel geschaltetes Halbeleiterelement (S1b) des Kurzschlussschalters (KS) nach einem Wenden des Stroms erst dann geschlossen wird (90), wenn im Überwachungsbereich (6) weiterhin ein Lichtbogen (X) detektiert wird (80),
**dadurch gekennzeichnet, dass**
- die Halbleiterschaltelemente (S1a..S3b) nach einer vorgebbaren Anzahl an Wiederzündungen (70') des Lichtbogens (X) geschlossen bleiben.

2. Verfahren nach Anspruch 1, **dadurch gekennzeichnet, dass** eine Überprüfung (60) im Hinblick auf ein neuerliches Zünden des Lichtbogens (X) bei jedem Wenden des Stroms stattfindet.

3. Verfahren nach Anspruch 1, **dadurch gekennzeichnet, dass** zwischen einer Detektion (20) eines Lichtbogens (X) und einer nachfolgenden Überprüfung (60) im Hinblick auf ein neuerliches Zünden des Lichtbogens (X) mehrere Halbwellen des Wechselstroms liegen.

4. Verfahren nach einem der Ansprüche 1 bis 3, **dadurch gekennzeichnet, dass** das Halbleiterschaltelement (S1a..S3b) nach dem ersten Wiederzünden (70') des Lichtbogens (X) geschlossen bleibt.

5. Verfahren nach einem der Ansprüche 1 bis 4, **dadurch gekennzeichnet, dass** ein dem Kurzschlussschalter (KS) vorgelagerter Schalter (S4..S6) mit oder nach dem dauerhaften Schließen (90) des Kurzschlussschalters (KS) geöffnet wird.

6. Verfahren nach einem der Ansprüche 1 bis 5, **dadurch gekennzeichnet, dass** beide antiparallel geschaltete Halbleiterschaltelemente (S1a..S3b) synchron angesteuert werden.

7. Steuerung (4) für zumindest zwei antiparallel geschaltete Halbleiterschaltelemente (S1a..S3b) eines Kurzschlussschalters (KS) zum Löschen eines Lichtbogens (X) in einem Wechselstromsystem (L1..L3), welche dazu ausgebildet ist,
- bei Detektion eines Lichtbogens (X) in einem Überwachungsbereich (6) ein in Flussrichtung des Stroms liegendes Halbleiterschaltelement (S1a) des Kurzschlussschalters (KS) zu schließen und
- ein zum genannten Halbleiterschaltelement (S1a) antiparallel geschaltetes Halbeleiterelement (S1b) des Kurzschlussschalters (KS) nach einem Wenden des Stroms erst dann zu schließen, wenn nach wie vor ein Lichtbogen (X) detektiert wird, **dadurch gekennzeichnet, dass**
- die Steuerung (4) weiter dazu ausgebildet ist, die Halbleiterschaltelemente (S1a..S3b) nach einer vorgebbaren Anzahl an Wiederzündungen (70') des Lichtbogens (X) dauerhaft zu schließen.

8. Anordnung (1) zum Löschen eines Lichtbogens (X) in einem Wechselstromsystem (L1..L3), umfassend einen Kurzschlussschalter (KS) mit zumindest zwei antiparallel geschalteten Halbleiterschaltelementen (S1a..S3b), **gekennzeichnet durch** eine Steuerung (4) nach Anspruch 7, welche mit den Halbleiterschaltelementen (S1a..S3b) verbunden ist.

9. Anordnung nach Anspruch 8, **gekennzeichnet durch** Stromsensoren (I1..I3) zum Messen eines Stroms in einer Zuleitung (L1..L3) zum Überwachungsbereich (6) und/oder einem Lichtsensor (5) zum Erfassen von Licht im Überwachungsbereich (6), welche an die Steuerung (4) angeschlossen sind.

10. Anordnung nach Anspruch 8 oder 9, **gekennzeichnet durch** einen mit der Steuerung (4) verbundenen Schalter (S4..S6), welcher dem Kurzschlussschalter (KS) vorgelagert ist.

## Claims

1. Method for extinguishing an arc (X) in an alternating current system (L1..L3) by means of a short-circuit switch (KS) which comprises at least two antiparallel-connected semiconductor switching elements (S1a..S3b), wherein
- upon detection (20) of an arc (X) in a monitoring area (6), a semiconductor switching element (S1a) of the short-circuit switch (KS), positioned in the flow direction of the current, is closed (30) and wherein
- after a reversal of the current, a semiconductor element (S1b) of the short-circuit switch (KS), which is connected anti-parallel relative to said semiconductor switching element (S1a), is only closed (90) if an arc (X) continues to be detected (80) in the monitoring area (6),
**characterised in that**
- the semiconductor switching elements (S1a..S3b) remain closed after a predeterminable number of re-ignitions (70') of the arc (X).

2. Method according to claim 1, **characterised in that** a check (60) takes place with regard to a renewed ignition of the arc (X) upon each reversal of the current.

3. Method according to claim 1, **characterised in that** between a detection (20) of an arc (X) and a subsequent check (60) with regard to a renewed ignition of the arc (X) there are a plurality of half-waves of the alternating current.

4. Method according to any of claims 1 to 3, **characterised in that** the semiconductor switching element (S1a..S3b) remains closed after the first re-ignition (70') of the arc (X).

5. Method according to any of claims 1 to 4, **characterised in that** a switch (S4..S6) upstream of the short-circuit switch (KS) is opened upon or after the permanent closure (90) of the short-circuit switch (KS).

6. Method according to any of claims 1 to 5, **characterised in that** both antiparallel-connected semiconductor switching elements (S1a..S3b) are actuated synchronously.

7. Controller (4) for at least two antiparallel-connected semiconductor switching elements (S1a..S3b) of a short-circuit switch (KS) for extinguishing an arc (X) in an alternating current system (L1..L3), which controller is designed
- to close a semiconductor switching element (S1a) of the short-circuit switch (KS), positioned in the flow direction of the current, upon detection of an arc (X) in a monitoring area (6), and
- after a reversal of the current, to only close a semiconductor element (S1b) of the short-circuit switch (KS), which is connected anti-parallel relative to said semiconductor switching element (S1a), if an arc (X) continues to be detected, **characterised in that**
- the controller (4) is further designed to permanently close the semiconductor switching elements (S1a..S3b) after a predeterminable number of re-ignitions (70') of the arc (X).

8. Arrangement (1) for extinguishing an arc (X) in an alternating current system (L1..L3), comprising a short-circuit switch (KS) having at least two antiparallel-connected semiconductor switching elements (S1a..S3b), **characterised by** a controller (4) according to claim 7, which controller is connected to the semiconductor switching elements (S1a..S3b).

9. Arrangement according to claim 8, **characterised by** current sensors (I1..I3) for measuring a current in a supply line (L1..L3) to the monitoring area (6) and/or a light sensor (5) for detecting light in the monitoring area (6), which are connected to the controller (4).

10. Arrangement according to claim 8 or 9, **characterised by** a switch (S4..S6) which is connected to the controller (4) and which is upstream of the short-circuit switch (KS).

## Revendications

1. Procédé d'extinction d'arc électrique (X) dans un système à courant alternatif (L1..L3) à l'aide d'un interrupteur de court-circuit (KS) comprenant au moins deux éléments de commutation à semiconducteur (Sla..S3b) montés de manière antiparallèle, dans lequel
- lors de la détection (20) d'un arc électrique (X) dans une région de surveillance (6), un élément de commutation à semi-conducteur (Sla), situé dans le sens de circulation du courant, de l'interrupteur de court-circuit (KS) est fermé (30) et dans lequel
- un élément à semi-conducteur (S1b), monté de manière antiparallèle par rapport audit élément de commutation à semi-conducteur (Sla), de l'interrupteur de court-circuit (KS) n'est fermé (90) après une inversion du courant que si un arc électrique (X) continue à être détecté (80) dans la région de surveillance (6), **caractérisé en ce que**
- les éléments de commutation à semi-conducteur (Sla..S3b) restent fermés après un nombre prédéterminé de rallumages (70') de l'arc électrique (X).

2. Procédé selon la revendication 1, **caractérisé en ce qu'**une vérification (60) relative à un nouvel allumage de l'arc électrique (X) est effectuée à chaque inversion du courant.

3. Procédé selon la revendication 1, **caractérisé en ce que** plusieurs demi-ondes du courant alternatif sont présentes entre une détection (20) d'un arc électrique (X) et une vérification (60) relative à un nouvel allumage de l'arc électrique (X).

4. Procédé selon l'une quelconque des revendications 1 à 3, **caractérisé en ce que** l'élément de commutation à semi-conducteur (Sla..S3b) reste fermé après le premier rallumage (70') de l'arc électrique (X).

5. Procédé selon l'une quelconque des revendications 1 à 4, **caractérisé en ce qu'**un interrupteur (S4..S6) placé en amont d'un interrupteur de court-circuit (KS) est ouvert au moment de, ou après, la fermeture (90) permanente de l'interrupteur de court-circuit (KS).

6. Procédé selon l'une quelconque des revendications 1 à 5, **caractérisé en ce que** deux éléments de commutation à semi-conducteur (Sla..S3b) montés de manière antiparallèle sont commandés de manière synchrone.

7. Commande (4) d'au moins deux éléments de commutation à semi-conducteur (Sla..S3b) montés de manière antiparallèle d'un interrupteur de court-circuit (KS) permettant l'extinction d'un arc électrique (X) dans un système à courant alternatif (L1..L3), qui est conçue pour
- lors de la détection d'un arc électrique (X) dans une région de surveillance (6), fermer un élément de commutation à semi-conducteur (Sla), situé dans le sens de circulation du courant, de l'interrupteur de court-circuit (KS) et
- ne fermer ensuite un élément à semi-conducteur (S1b), monté de manière antiparallèle par rapport audit élément de commutation à semi-conducteur (Sla), de l'interrupteur de court-circuit (KS) après une inversion du courant que si un arc électrique (X) continue à être détecté, **caractérisé en ce que**
- la commande (4) est en outre conçue pour fermer de manière permanente les éléments de commutation à semi-conducteur (Sla..S3b) après un nombre prédéterminé de rallumages (70') de l'arc électrique (X).

8. Agencement (1) permettant d'éteindre un arc électrique (X) dans un système à courant alternatif (L1..L3), comprenant un interrupteur de court-circuit (KS) avec au moins deux éléments de commutation à semi-conducteur (Sla..S3b) montés de manière antiparallèle, **caractérisé par** une commande (4) selon la revendication 7 reliée aux éléments de commutation à semi-conducteur (Sla..S3b).

9. Agencement selon la revendication 8, **caractérisé par** des capteurs de courant (I1..I3) permettant de mesurer un courant dans une ligne d'alimentation (L1..L3) menant à la région de surveillance (6) et/ou par un capteur de lumière (5) permettant de détecter de la lumière dans la région de surveillance (6), qui sont connectés à la commande (4).

10. Agencement selon la revendication 8 ou 9, **caractérisé par** un interrupteur (S4..S6) relié à la commande (4) et placé en amont de l'interrupteur de court-circuit (KS).
